# EUROPÄISCHE PATENTSCHRIFT

(11) **EP 1 820 622 B1**
(45) Veröffentlichungstag und Bekanntmachung des Hinweises auf die Patenterteilung: **15.04.2009**
(21) Anmeldenummer: 06024964.6
(22) Anmeldetag: 02.12.2006
(51) Int. Cl.: B29C 51/26, B21D 24/06

(54) **Formstation mit Niederhalter und Gegenlager**
Forming station with clamping frame and corresponding counter holding surface
Poste de formage avec dispositif de retenue et surface de serrage correspondante

(30) Priorität: 15.02.2006 DE 102006007205
(43) Veröffentlichungstag der Anmeldung: 22.08.2007
(73) Patentinhaber: UHLMANN PAC-SYSTEME GmbH & Co. KG, 88471 Laupheim (DE)
(72) Erfinder: Knüppel, Jörg, 88477 Schwendi (DE); Matzenmüller, Jürgen, 88416 Bellamont (DE); Litke, Harald, 88480 Achstetten (DE)
(74) Vertreter: Wächter, Jochen

(56) Entgegenhaltungen:
- EP-A1- 0 754 508
- DE-A1- 2 011 178
- GB-A- 2 353 246
- US-A- 3 330 002
- US-A- 3 749 542

## Beschreibung

Die Erfindung betrifft eine Formstation zum Verformen von Folien, insbesondere Kunststoff- oder Metallfolien, insbesondere in einer Verpackungsmaschine, mit einer oberen Werkzeugaufnahme für ein oberes Formwerkzeug und einer unteren Werkzeugaufnahme für ein unteres Formwerkzeug, wobei die Folie zwischen dem oberen Formwerkzeug und dem unteren Formwerkzeug hindurchgeführt ist, von denen das eine einen Niederhalter und das andere ein Gegenlager aufweist.

Derartige Formstationen sind aus der Praxis bekannt, bei denen am Niederhalter und gegebenenfalls auch am Gegenlager aus Stahl gebildete Riffelleisten angeordnet sind, die über einen sehr geringen Toleranzausgleich verfügen und daher auf 0,02 mm genau ausgerichtet werden müssen. Diese Riffelleisten sind aufwendig in der Herstellung, unterliegen Verschleiß und verursachen aufgrund der erforderlichen hochpräzisen Ausrichtung einen hohen Montageaufwand.

EP 0 754 508 offenbart eine Formstation zum Verformen von Folien mit einem Rohlingshalter und einer gegenüberliegenden Aufnahme zum Halten des Rohlings sowie einer Stanze. Mittels unabhängig voneinander verstellbarer Stößel wird eine punktartige Beaufschlagung erzeugt. In DE 20 11 178 ist ein einstellbarer Spannrahmen zum Festhalten von Folien offenbart, bei dem sowohl an dem verschiebbaren Längsleisten des Spannrahmens, als auch an den Querleisten breitflächige Profile angeordnet sind, die durch die Erzeugung eines Vakuums zwischen den Teilen die beiden Rahmenflächen zusammenpressen.

Der Erfindung liegt daher die Aufgabe zugrunde, bei einer Formstation der eingangs genannten Art die vorstehend beschriebenen Nachteile zu vermeiden.

Diese Aufgabe wird nach der Erfindung bei einer Formstation nach Anspruch 1 gelöst.

Bei dieser Ausführungsform wird die ausreichend groß bemessene Klemmfläche des Niederhalters genutzt, um die erwünschte Klemmung der Folie zwischen dem oberen Formwerkzeug und dem unteren Formwerkzeug zu erzielen, wobei diese Klemmung dadurch unterstützt wird, dass die Klemmfläche mit einer harten Beschichtung versehen ist, die auf der zuvor mittels Glaskugelbestrahlung vorbereiteten Klemmfläche angeordnet ist. Durch diese Merkmale wird eine sehr gute Oberflächenbeschaffenheit gewährleistet, die im Einsatz mit einfachen Mitteln eine hohe Klemmkraft erzeugt und so die Folie sicher klemmt, ohne den Klemmmbereich der Folie zu deformieren oder zu beschädigen. Es liegt daher weniger Abfall vor, insbesondere da auch die Klemmfläche in folge ihrer Oberflächeneigenschaften klein bemessen sein kann.

Für eine große Lebensdauer der Beschichtung ist es günstig, wenn die Beschichtung durch eine Keramikbeschichtung, vorzugsweise in einer geringen Rauhigkeit von 2,7 Mikrometer gebildet ist, wobei diese geringe Rauhigkeit wiederum dazu dient, Verzahnungseffekte zwischen der Klemmfläche und der Folie zu vermeiden.

Im Rahmen der Erfindung weiterhin besonders bevorzugt ist es, wenn die Klemmleisten aus Kunststoff bestehen, da der Kunststoff eine Erhöhung der Haftreibung gegenüber der Folie bewirkt und zugleich einen Toleranzausgleich durch elastische Einfederung aufgrund des dem Kunststoff eigenen Elastizitätsmoduls bereitstellt.

In der Praxis hat es sich bewährt, wenn das obere Formwerkzeug und/oder das untere Formwerkzeug aus Aluminium bestehen, insbesondere da so trotz der Verwendung eines metallischen Werkstoffes relativ geringe Werkzeuggewichte erzielt werden können. Außerdem hat es sich bewährt, wenn das obere Formwerkzeug mindestens einen Stempel und das untere Formwerkzeug mindestens eine Stempelaufnahme aufweist, so dass das obere Formwerkzeug als Patrize und das untere Formwerkzeug als Matrize fungieren.

Indem der Niederhalter von einer an dem diesen tragenden Formwerkzeug abgestützten Druckfeder beaufschlagt ist, ist in der geöffneten Stellung der Formwerkzeuge eine Mindesthöhe der Klemmkraft, die auf die Folie beim Aufsetzen einwirkt, sichergestellt.

Außerdem ist es im Rahmen der Erfindung vorgesehen, dass die Klemmleisten quer zur Klemmrichtung am zugeordneten Formwerkzeug befestigt sind, um so an jeder Stelle gleiche Klemmverhältnisse zu erzielen.

Es ist zu betonen, dass den Werkzeugaufnahmen Stellglieder zur Ausrichtung des unteren Formwerkzeugs gegenüber dem oberen Formwerkzeug zugeordnet sind, um so auch das untere Formwerkzeug und das obere Formwerkzeug aus getrennten Werkzeugteilen fertigen zu können, die keiner gegenseitigen Führung bedürfen.

Im folgenden wird die Erfindung an einem in der Zeichnung dargestellten Ausführungsbeispiel näher erläutert; es zeigen:

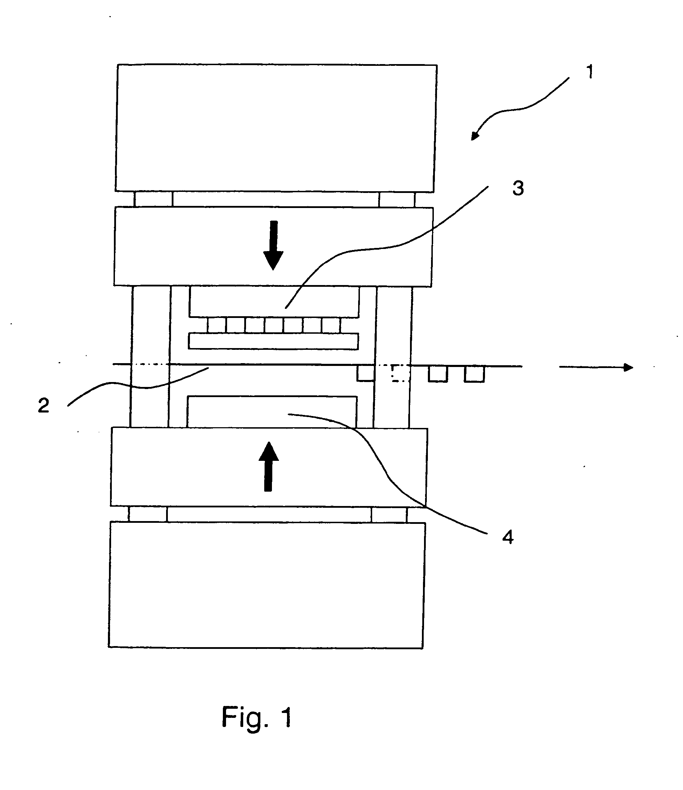

- Fig. 1: die schematische Darstellung einer Formstation mit dem darin eingesetzten oberen Formwerkzeug und dem unteren Formwerkzeug,

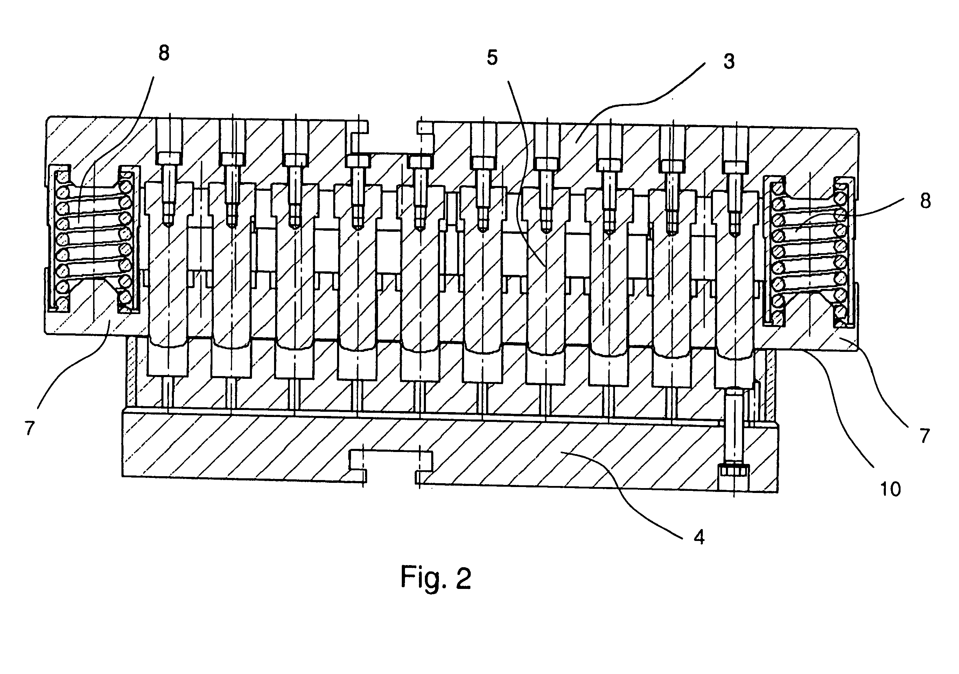

- Fig. 2: einen Schnitt durch das obere Formwerkzeug und das untere Formwerkzeug in der geschlossenen Stellung mit der hindurchgeführten Formfolie, und

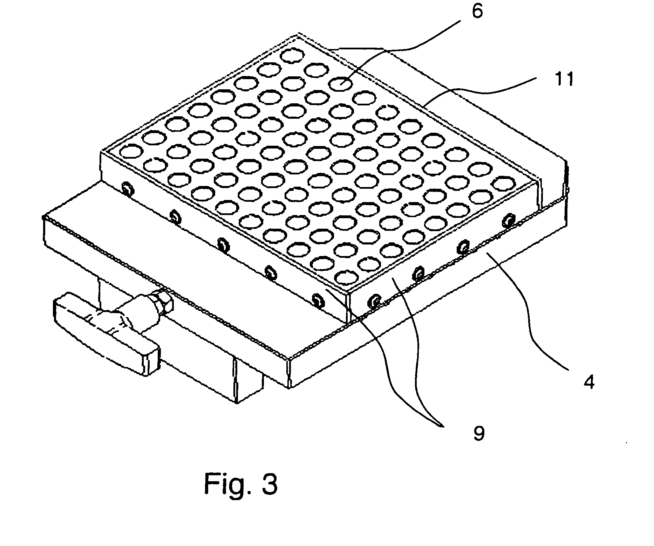

- Fig. 3: eine perspektivische Ansicht auf das untere Formwerkzeug.

In der Zeichnung ist eine Formstation 1 gezeigt, wie diese insbesondere in Thermoformaschine eingesetzt wird, die der Herstellung von Blisterpackungen dienen. Derartige Blisterpackungen bestehen aus einer Formfolie 2 sowie einer Deckfolie, wobei mittels der Formstation 1 in die Formfolie 2 Karitäten eingebracht werden, die der Aufnahme von zu verpackenden Produkten dienen. Die Formstation 1 weist eine obere Werkzeugaufnahme für ein oberes Formwerkzeug 3 und eine untere Werkzeugaufnahme für ein unteres Formwerkzeug 4 auf, wobei die beiden Formwerkzeuge 3, 4 jeweils aus zwei Werkzeugteilen gebildet sind und aus Aluminium bestehen. Das obere Formwerkzeug 3 weist bei dem in der Zeichnung dargestellten Ausführungsbeispiel eine Mehrzahl von Stempeln 5 auf, während das untere Formwerkzeug 4 in einer zu den Stempeln 5 korrespondierenden Anordnung eine entsprechende Anzahl von Stempelaufnahmen 6 aufweist. Dem oberen Formwerkzeug 3 ist ein Niederhalter 7 zugeordnet, der von einer an dem oberen Formwerkzeug 3 abgestützten Druckfeder 8 beaufschlagt wird. Das untere Formwerkzeug 4 besitzt als Gegenlager 11 für den Niederhalter 7 Klemmleisten 9, die aus Kunststoff bestehen und aufgrund ihrer Elastizität Fertigungsungenauigkeiten ausgleichen können beim Aufsetzen des Niederhalters 7. Konkret bei dem in der Zeichnung dargestellten Ausführungsbeispiel werden beim Aufsetzen des Niederhalters 7 die Klemmleisten durch die Vorspannkraft der Druckfeder 8 um ca. 0,05 mm zusammengedrückt. Die an dem Niederhalter 7 ausgebildete Klemmfläche 10 wird zur Vorbereitung einer Beschichtung zunächst einer Glaskugelbestrahlung unterzogen und sodann auf diese so behandelte Oberfläche eine harte Beschichtung aufgebracht, die zu einer planen Klemmfläche 10 mit geringer Rauhigkeit führt, wozu sich insbesondere eine Keramikbeschichtung eignet. Zur gegenseitigen Ausrichtung des oberen Formwerkzeugs 3 und des unteren Formwerkzeugs 4 sind den Werkzeugaufnahmen der Formstation 1 Stellglieder zugeordnet.

## Patentansprüche

1. Formstation zum Verformen von Folien (2), insbesondere Kunststoff- oder Metallfolien, insbesondere in einer Verpackungsmaschine, mit einer oberen Werkzeugaufnahme für ein oberes Formwerkzeug (3) und einer unteren Werkzeugaufnahme für ein unteres Formwerkzeug (4), wobei die Folie (2) zwischen dem oberen Formwerkzeug (3) und dem unteren Formwerkzeug (4) hindurchgeführt ist, von denen das eine einen Niederhalter (7) und das andere ein Gegenlager (11) aufweist, wobei die dem Gegenlager (11) zuweisende Klemmfläche (10) des Niederhalters (7) plan, ohne Riffelleisten, ausgeführt ist, und das Gegenlager (11) durch Klemmleisten (9) gebildet ist, **dadurch gekennzeichnet, dass** die Klemmleisten seitlich am zugeordneten Formwerkzeug befestigt sind.

2. Formstation nach Anspruch 1, **dadurch gekennzeichnet, dass** die Klemmfläche (10) mit einer harten Beschichtung versehen ist.

3. Formstation nach Anspruch 2, **dadurch gekennzeichnet, dass** die Beschichtung auf der zuvor mittels Glaskugelbestrahlung vorbereiteten Klemmfläche (10) angeordnet ist.

4. Formstation nach Anspruch 2 oder 3, **dadurch gekennzeichnet, dass** die Beschichtung durch eine Keramikbeschichtung, vorzugsweise mit einer geringen Rauhigkeit von 2,7 Mikrometer, gebildet ist.

5. Formstation nach einem der Ansprüche 1 bis 4, **dadurch gekennzeichnet, dass** die Klemmleisten (9) aus Kunststoff bestehen.

6. Formstation nach einem der Ansprüche 1 bis 5, **dadurch gekennzeichnet, dass** das obere Formwerkzeug (3) und/oder das untere Formwerkzeug (4) aus Aluminium bestehen.

7. Formstation nach einem der Ansprüche 1 bis 6, **dadurch gekennzeichnet, dass** das obere Formwerkzeug (3) mindestens einen Stempel (5) und das untere Formwerkzeug (4) mindestens eine Stempelaufnahme (6) aufweist.

8. Formstation nach Anspruch 1 bis 7, **dadurch gekennzeichnet, dass** der Niederhalter (7) von einer an dem diesen tragenden Formwerkzeug (3, 4) abgestützten Druckfeder (8) beaufschlagt ist.

9. Formstation nach einem der Ansprüche 1 bis 8, **dadurch gekennzeichnet, dass** die Klemmleisten (9) quer zur Klemmrichtung am zugeordneten Formwerkzeug (3, 4) befestigt ist.

10. Formstation nach einem der Ansprüche 1 bis 9, **dadurch gekennzeichnet, dass** den Werkzeugaufnahmen Stellglieder zur Ausrichtung des unteren Formwerkzeugs (4) gegenüber dem oberen Formwerkzeug (3) zugeordnet sind.

## Claims

1. Forming station for shaping sheets (2), in particular plastics material or metal sheets, in particular in a packing machine, comprising an upper tool holder for an upper forming tool (3) and a lower tool holder for a lower forming tool (4), the sheet being guided through between the upper forming tool (3) and the lower forming tool (4), one of which comprises a hold-down device (7) and the other of which comprises a counter face (11), the clamping face (10) of the hold-down device (7) which faces the counter face (11) being constructed so as to be planar, without grooved blocks, and the counter face (11) being formed by clamping blocks (9), **characterised in that** the clamping blocks are fixed laterally to the associated forming tool.

2. Forming station according to claim 1, **characterised in that** the clamping face (10) is provided with a hard coating.

3. Forming station according tb claim 2, **characterised in that** the coating is arranged on the clamping face (10) which has previously been prepared by glass bead blasting.

4. Forming station according to either claim 2 or claim 3, **characterised in that** the coating is formed by a ceramic coating, preferably with a low roughness of 2.7 micrometres.

5. Forming station according to any one of claims 1 to 4, **characterised in that** the clamping blocks (9) consist of plastics material.

6. Forming station according to any one of claims 1 to 5, **characterised in that** the upper forming tool (3) and/or the lower forming tool (4) consists of aluminium.

7. Forming station according to any one of claims 1 to 6, **characterised in that** the upper forming tool (3) comprises at least one punch (5) and the lower forming tool (4) comprises at least one punch recess (6).

8. Forming station according to claims 1 to 7, **characterised in that** the hold-down device (7) is loaded by a compression spring (8) braced against the forming tool (3, 4) which carries said hold-down device.

9. Forming station according to any one of claims 1 to 8, **characterised in that** each clamping block (9) is fixed to the associated forming tool (3, 4) transverse to the clamping direction.

10. Forming station according to any one of claims 1 to 9, **characterised in that** positioning members for aligning the lower forming tool (4) relative to the upper forming tool (3) are associated with the tool holders.

## Revendications

1. Poste de formage pour le formage de feuilles (2), en particulier de feuilles métalliques ou de matière plastique, notamment dans une machine d'emballage, comprenant un raccordement d'outil supérieur pour un outil de formage supérieur (3) et un raccordement d'outil inférieur pour un outil de formage inférieur (4), la feuille (2) étant guidée entre l'outil de formage supérieur (3) et l'outil de formage inférieur (4), dont l'un présente un serre-flan (7) et l'autre une butée (11), la surface de serrage (10) du serre-flan (7), affectée à la butée (11), ayant une réalisation plane, sans barres cannelées, et la butée (11) étant formée par des barres de serrage (9), **caractérisé en ce que** les barres de serrage sont fixées latéralement sur l'outil de formage associé.

2. Poste de formage suivant la revendication 1, **caractérisé en ce que** la surface de serrage (10) est munie d'un revêtement dur.

3. Poste de formage suivant la revendication 2, **caractérisé en ce que** le revêtement est disposé sur la surface de serrage (10), préalablement traitée au moyen d'une projection de billes de verre.

4. Poste de formage suivant l'une des revendications 2 et 3, **caractérisé en ce que** le revêtement est formé d'un revêtement de céramique, de préférence d'une faible rugosité de 2,7 micromètres.

5. Poste de formage suivant l'une des revendications 1 à 4, **caractérisé en ce que** les barres de serrage (9) se composent de matière plastique.

6. Poste de formage suivant l'une des revendications 1 à 5, **caractérisé en ce que** l'outil de formage supérieur (3) et/ou l'outil de formage inférieur (4) se composent d'aluminium.

7. Poste de formage suivant l'une des revendications 1 à 6, **caractérisé en ce que** l'outil de formage supérieur (3) présente au moins un poinçon (5) et l'outil de formage inférieur (4) présente au moins un support de poinçon (6).

8. Poste de formage suivant l'une des revendications 1 à 7, **caractérisé en ce que** le serre-flan (7) est sollicité par un ressort de pression (8) supporté sur l'outil de formage (3, 4) supportant ce serre-flan.

9. Poste de formage suivant l'une des revendications 1 à 8, **caractérisé en ce que** les barres de serrage (9) sont fixées sur l'outil de formage associé (3, 4) transversalement à la direction de serrage.

10. Poste de formage suivant l'une des revendications 1 à 9, **caractérisé en ce que** des organes de réglage, destinés à l'orientation de l'outil de formage inférieur (4) par rapport à l'outil de formage supérieur (3), sont associés aux raccordements d'outils.
